# NEUE EUROPÄISCHE PATENTSCHRIFT

(11) **EP 1 323 497 B2**
(45) Veröffentlichungstag und Bekanntmachung des Hinweises auf die Entscheidung über den Einspruch: **14.09.2011**
(45) Hinweis auf die Patenterteilung: 18.02.2009
(21) Anmeldenummer: 03003339.3
(22) Anmeldetag: 02.12.1997
(51) Int. Cl.: B24B 13/06, B24B 47/16, B24B 41/04

(54) **Hochgeschwindigkeitsdrehmaschine zum Herstellen optisch aktiver Oberflächen**
High speed lathe for manufacturing optical active surfaces
Tour à grande vitesse pour la fabrication de surfaces optiques actives

(30) Priorität: 20.12.1996 DE 19653233
(43) Veröffentlichungstag der Anmeldung: 02.07.2003
(62) Teilanmeldung aus: 97121146.1
(73) Patentinhaber: Schneider GmbH + Co. KG, 35239 Steffenberg (DE)
(72) Erfinder: Schneider, Gunter, 35037 Marburg (DE); Krämer, Klaus, 35232 Dautphetal (DE)
(74) Vertreter: Thews, Gustav

(56) Entgegenhaltungen:
- EP-A- 0 420 244
- EP-A- 0 453 627
- WO-A-97/13603
- US-A- 4 343 206
- US-A- 5 220 749
- US-A- 5 485 771

## Beschreibung

Optisch aktive Oberflächen werden benötigt an Linsen, Hohlspiegeln, Prismen und ähnlichen optischen Produkten. Zur sprachlichen Vereinfachung wird nachfolgend im Zusammenhang mit optisch aktiven Oberflächen von 'Linsen' gesprochen, Gemeint sind unter diesem Begriff aber nach wie vor alle Oberflachen, die optisch aktiv sind.

Während Linsen aus härteren Materialien, wie z. B. mineralischen Gläsern, durch Schleifen hergestellt werden, können Linsen aus welcherem Material such durch spanababnehmende Bearbeitungsvorgänge, z. B. auf Drehmaschinen, gefertigt werden.
Die Erfindung bezieht sich auf eine Maschine zum Herstellen von optisch aktiven Flächen mit einer um eine C-Achae drehbaren, eine Werkstückaufnahme aufweisenden elektronisch drehzahlgesteuerten Werkstückspindel und einem mit Bezug zur C-Achse in radialer Richtung einer X-Achse und in axialer Richtung einer Z-Achse bewegbaren Werkzeugschlitten, wobei mindestens für die axiale Vorschubbewegung ein Linearmotor und für die X-, Z- und C-Achse ein die Position der Z-Achse, die Position der X-Achse sowie die Drehung der C-Achse kontrollierender Steuerungsprozessor vorgesehen ist, Außerdem besieht sich die Erfindung auf ein Verfahren zum Betrieb einer solchen Maschine.
Merkmale der bisher benutzten Drehmaschinen sind wie folgt:

1. NC-Maschinen mit konventionellen Antrieben für die Herstellung rotationssysmmetrischer Linsen
   - Die Bewegungen des Werkzeugs sind nur langsam, bezogen auf die Umfangsgeschwindigkeit des Werkstücks.
   - Das Werkzeug führt pro Umdrehung der Spindel eine stetige Bewegung aus, d. h. bezogen auf die einzelne Spindelumdrehung, findet in der Werkzeugbewegung kein Richtungswechsel statt.
2. Drehmaschinen mit Linearmotor für die Metallbearbeitung
   - In der Metallbearbeitung bekannt gewordene Drehmaschinen mit Linearmotoren werden nur für die sogenannte Unrundbearbeitung einge-setzt, d. h., daß die Werkstücke an ihrem Außeren Umfang bearbeitet werden. Hierbei wird üblicherweise jeweils ein längeres Teilstück an dem bearbeiteten Werkstück mit gleichem Querschnitt hergestellt. Daraus resultiert, daß für zahlreiche aufeinander folgende Umdrehungen des Werkstücke mit dem gleichen Datensatz für den Vorschubantrieb des Werkzeugschilttens gearbeitet werden kann, da dieses auch aufeinander folgend die gleichen Bewegungen ausführt. Ein weiteres Merkmal beim Unrundbearbeiten besteht darin, daß die Umfangsgeschwindigkeit und damit die Schnittgeschwindigkeit abgesehen von den hergestellten Ovalltäten in etwa konstant bleibt. Die verwendeten Asynchron-Unearmotore haben darüber hinaus eine hohe Wärmeentwicklung, was zu Ungenauigkeiten in Folge von unerwünschten Wärmedehnungen führt. Sie haben nur eine geringe Dynamik und kleine Haltekräfte insbesondere im Stillstand.

Aus dem vorgenannten ergibt sich, daß mit den Drehmaschinen entsprechend 1. nur die Üblichen drehsymmetrischen Linsen hergestellt werden können, bei denen alle Oberflächenelemente, die den gleichen Abstand von der Rotationsachse haben, die gleiche Krümmung aufweisen. Die schnellen Oszillationsbewegungen des Werkzeugschlittens, die zur Herstellung nicht rotationssymmetrischer Linsen nötig sind, können diese Maschinen konstruktionsbedingt nicht ausführen. Die Drehmaschinen entsprechend 2, sind für die Linsenherstellung nicht geeignet, da das Material hier am Umfang bearbeitet wird, während es bei der Linsenher-stellung auf der Stirnseite bearbeitet werden muß, woraus sich völlig andere Problemstellungen ergeben. Die bisher bekannt gewordenen Drehmaschinen sind demnach nicht geeignet zum Herstellen von Linsen mit beliebig, d. h. nicht drehsymmetrisch gestalteten Oberflächen.

Es gibt jedoch einen erheblichen Bedarf an Linsen, die nicht drehsymmetrisch sind, bei denen also die Oberflächenelemente auf beliebigen zur Rotationsachse konzentrischen Kreisen unterschiedliche Krümmungen und Neigungen im Verlauf des jeweiligen Kreises haben. Ein typisches Anwendungsbeispiel für solche Linsen gibt es in der Brillenindustrie. Es werden Brillengläser mit torus-ertigen Oberflächen, oft mit zusätzlichen Krümmungen oder auch anderen Freiformilächen zum stufenlosen Behen zwischen Fern und Nah benötigt. Entsprechend der unterschiedlichen Aufgabenstellung weist das Brillenglas in mehreren Bereichen eine unterschiedliche Krümmung auf. Eine Herstellung durch drehende Bearbeitung ist heute nicht möglich. Die vorliegende Erfindung bezieht sich auf eine Hochgeschwindigkeits-Drehmaschine zur Herstellung solcher oder ähnlicher Linsen.
Es ist bereits eine Vorrichtung zur Herstellung nicht rotationssymmetrischer Flächen aus der US 4,343,206 bekannt. Das Werkstück ist dabei auf einem ersten Werkstückschlitten drehbar um eine Y-Achse angeordnet, dem rechtwinklig dazu ein in X-Richtung bewegbarer zweiter Werkzeugschlitten zugeordnet ist. Der zweite Werkzeugschlitten weist einen dritten, parallel zum ersten Werkstückschlitten in Z- bzw. Y-Richtung bewegbaren Hilfsschlitten für das Werkzeug auf. Der Hilfsschlitten ist dabei in Z-Richtung retativ schnell, einem vorbestimmten Programm nach senkrecht zu einer Drehachse des Werkstücks translatorisch bewegbar. Der Hilfsschlitten wird dabei in Übereinstimmung mit einem von der Winkelstellung ϕ des Werkstücks und von der Position X des zweiten Werkzeugschlittens abhängigen Signal in Z-Richtung an das Werkstück heran- und vom Werkstücks weggefahren. Im Gegensatz zur Drehbewegung ϕ und zur Bewegung in X-Richtung ist die Bewegung in Richtung der Z-Achse über eine feste Funktion f (X, ϕ) steuerbar.
Aus der US 5,485,771 ist bereits eine Maschine zum Herstellen von ophthalmischen bzw. optisch aktiven Flächen mit einer um eine C-Achse (axis of rotation) drehbaren, ein Werkstück aufweisenden, elektronisch drehzahlgesteuerten Werkstückspindel und zwei mit Bezug zur Rotationsachse in radialer Richtung einer Y-Achse (second direction) bzw. in axialer Richtung einer X-Achse (first direction) bewegbaren Werkzeugschlitten bekannt, wobei für die Vorschubbewegung der Werkzeugschlitten ein konventioneller Vorschubantrieb oder ein Linearmotor vorgesehen ist. Der X-, Z- und C-Achse ist ein Steuerungsprozessor zugeordnet, der die Vorschubbewegungen und die Drehung unabhängig voneinander kontrolliert. Der Erfindung liegt die Aufgabe zugrunde, eine Hochgeschwindigkeitsdrehmaschine derart auszubilden und anzuordnen, dass eine präzise und schnelle Herstellung optisch aktiver Freiflächen gewährleistet ist. Gelöst wird die Aufgabe durch die Maschine nach Anspruch 1, die Verwendung nach Anspruch 4 und das Verfahren nach Anspruch 8.

Die erfindungsgemäße Hochgeschwindigkeits-Drehmaschine verfügt über eine angetriebene Werkstückspindel, die das Werkstück tragt, und deren Rotation von einer Elektronik überwacht und gesteuert wird (C-Achse). Desweiteren ist ein Werkzeugschiltten vorhanden, der das Werkzeug trägt und radial und axial zu der Werkstückspindel bewegt werden kann, wobei auch diese Bewegungen elektronisch über wacht und gesteuert werden (X-Achse und Z-Achse). Eine Besonderheit an der erfindungsgemäßen Maschine besteht darin, daß alle drei Achsen elektronisch miteinander verknüpft werden, d. h. die Bewegungen der C-Achse, X-Achse und Z-Achse hängen voneinander ab und werden so verknüpft, daß die gewünschte Linsenkontur entsteht.

Die Drehbewegung der C-Achse wird in allen Parametern von der genannten elektronischen Steuerung und Regelung kontrolliert. Hierzu gehören z. B. die Anzahl der Umdrehungen ab Start, der Phasenwinkel und die Drehzahl. Die C-Achse wird unter anderem so angesteuert, daß die Drehzahl der Werkstückspindel ansteigt, wenn das Werkzeug radiale Bewegungen in der X-Achss, Richtung Rotationsachse der Werkstückspindel (C-Achse), ausführt. So bleibt die Schnittgeschwindigkeit (Relativgeschwindigkeit zwischen Werkzeug und Werkstück) wie erwünscht konstant. Diese Steigerung der Drehzahl wird kurz vor Erreichen der Rotationsschse des Werkstücks abgebrochen und von da an mit konstanter, hoher Drehzahl weitergearbeitet Dies ist erforderlich, da sonst in der Nahe der Rotationsachse, wo der Drehradius sehr klein ist bzw. im Grenzfall gleich Null wird, die Drehzahl sehr groß bzw. unendlich würde.

Mit der genannten Drehzahlsteuerung wird erreicht, daß die Schnittgeschwindigkeit (Bahngeschwindigkeit) annähernd gleich groß ist, unabhängig davon, auf welchem Radius des Werkstücks die Bearbeitung mit dem Werkzeug gerade stattfindet, solange es sich nicht in Nähe der Rotationsachse befindet. Die Begrenzung der maximalen möglichen Drehzahl sorgt dafür, daß bei Bearbeitung in Nähe der Rotationsachse des Werkstücks (C-Achse) keine unzulässig hohen Drehzahlen auftreten. Dies ist insbesondere auch im Hinblick auf die Bewegungen der mit der C-Achse verknüpften Z-Achse wichtig, deren Schwingfrequenz nach oben hin begrenzt ist.

Während der Bewegung des Werkzeugs in radialer Richtung, das heißt in Richtung der X-Achse, wird es gleichzeitig axial, in Richtung der Z-Achse, bewegt und so die gewünscht Kontur erzeugt. Wollte man sphärische Linsen erzeugen, so wäre die Bewegung in der Z-Achse stetig, das heißt es würde kein Richtungswechsel stattfinden. Da aber asphärische Linsen aller Art und insbesondere torische Linsen (auch Brillenglaser für Mehrbereichsehen) hergestellt werden sollen, muß die Werkzeugbewegung in der Z-Achse sehr viel komplexer sein. Insbesondere muß sie mit den beiden anderen Maschinenachsen (C- und X-Achse) verknüpft werden. Zum Herstellen einer torischen Linse z. B. sind während einer einzigen Umdrehung der Werkstückspindel um die C-Achse mehrere Richtungswechsel des Werkzeugs in der Z-Achse nötig, d. h. der Werkzeugschlitten mit der Werkzeugspindel führt oszilllerende Bewegungen aus, deren Bewegungsablauf sehr genau mit demjenigen der beiden anderen Achsen koordiniert sein muß.

Die Schneidkante des Werkzeugs muß gegen Ende der Bearbeitung exakt durch die Mitte der Linse (Rotationsschse) hindurchlaufen und dann mit umgekehrter Ansteuerung der Z-Achse noch ein Stück über die Mitte hinauslaufen, um dann mit keinem Gradienten in homogener Bewegung in Z-Richtung von dem Werkstück abzuheben. Diese Art der Mlttenbearbeitung ist nötig, damit auch die besonders wichtige Linsenmitte optisch einwandfrei, d. h. mit größer mechanischer Präzision hergestellt werden kann.

Das Bearbeitungswerkzeug führt bei der erfindungsgemäßen Maschine demnach mindestens in einer Bewegungsrichtung schnelle oszillierende Bewegungen aus und wird dabei von einem hochdynamischen Linearmotor angetrieben. Wenn das Werkzeug z. B. in axialer Richtung (Z-Achse) schnelle aber kontrollierte Oszillationsbewegungen ausführt, während es in radialer Richtung (X-Achse) gleichförmig vorwärts bewegt wird und die Bewegungen der drei Achsen miteinander koordiniert sind, so lassen sich damit Linsen herstellen, bei denen die Krümmung und Neigung der Oberflächenelemente auf beliebigen zur Rotationsachse der Spindel konzentrischen Kreisen in Abhängigkeit vom Drehwinkel unterschiedliche Werte aufweisen, wenn man dem Verlauf des jeweiligen Kreises folgt. Dies bedeutet, daß Linsen mit beliebiger Oberflächenkontur hergestellt werden können.

Wenn das Werkzeug angetrieben von einem hochdynamischen Linearmotor auch in der X-Achse Oszillationsbewegungen ausführt, so lassen sich mit der entsprechend ausgerüsteten Maschine auch Linsen herstellen, deren äußerer Umfang nicht kreisförmig, sondern beliebig gestaltet ist. Eine wichtige Anwendung hierfür ist das Anpassen von Brillengläsern an die Form des Brillengestells. Die Gläser müssen in diesem Fall an ihrem äußeren Umfang mehr oder weniger stark von der Kreisform abweichen, Diese brillenspezifischen Formen müssen in zunehmenden Maße bereits beim Linsenhersteller gefertigt werden. Hierzu gehört auch das Brechen der Kanten (Anfasen) und das Anbringen von umlaufenden Stegen am Linsenumfang zur Aufnahme im Brillengestell.

Das Problem bei der Konstruktion einer solcher Hochgeschwindigkeits-Drehmaschine besteht darin, den Werkzeugschlitten mit dem Bearbeitungswerkzeug in stetigem Wechsel, d. h. oszillierend so zu beschleufilgen, daß das Bearbeitungswerkzeug mit höchster Präzision die vorgegebene Position einnimmt Diese Positionen des Werkzeugs in Abhängigkeit vom Drehwinkel der Spindel müssen ohne Überschwingen oder Nachschwingen erreicht werden. Insbesondere bei starken Krümmungsänderungen in Abhängigkeit vom Drehwinkel der Spindel können hierbei ganz erhebliche Beschleunigungskräfte auftreten. Hinzu kommt, daß bei jeder neuen Umdrehung der Werkstückspindel ein neuer Bewegungsablauf das Werkzeugschilttens erforderlich ist und die Bewegung aller drei Achsen (C- X-und Z-Achse) koordiniert mit den beiden anderen ablaufen muß.

Die bisher gebräuchlichen Antriebe der Werkzeugschlitten sind ohne Ausnahme nicht in der Lage die erforderlichen Beschleunigungswerte aufzubringen und arbeiten außerdem nicht mit der nötigen Präzision. Ein Grund für diese Mängel besteht darin, daß die bisher üblichen Antriebe der Werkzeugschlitten überwiegend darauf beruhen, daß die Drehbewegung von Elektromotoren durch geeignete mechanische Zwischenglieder in Linearbewegungen umgesetzt wird. Ein rascher Wechsel der Linearbewegung hätte bei diesen Systemen daher auch ein Wechsel in der Drehrichtung der Antriebsmotore zur Folge. Solche Drehrichtungswechsel lassen sich jedoch nur relativ langsam ausführen, da schnell laufende Elektromotoren sehr viel kinetische Energie gespeichert haben, die zunächst auf Null abgebremst werden muß, bevor die Drehrichtung umgekehrt werden kann. Hierfür ist Zeit erforderlich, ebenso wie für den nachfolgenden Wiederanlauf des Motors in entgegengesetzter Richtung. Ein spontaner Wechsel der Bewegungsrichtung des Werkzeugschlittens ist damit nicht durchzuführen.

Auch die bisher bei Werkzeugmaschinen für die Metallbearbeitung bekannt gewordenen Asynchron-Linearmotoren eignen sich nicht für die stirnseitige Materialbearbeltung zum Herstellen von nicht rotationssymmetrischen Linsen. Sie haben eine zu große Wärmeentwicklung, was bei der Anwendung im optischen Bereich zu nicht vertretbaren Ungenauigkeiten in Folge von Wärmedehnungen führt, außerdem sind sie zu langsam, d. h. sie verfügen nicht über die nötige Dynamik und die Haltekräfte insbesondere im Stillstand sind zu gering.

Zur Vermeidung der vorgenannten Schwierigkelten wird erfindungsgemäß auf den Einsatz von Elektromotoren mit rotierenden Teilen und auf Asynchron-Linearmotore verzichtet. Zum Einsatz kommen hingegen hochdynamische Linearmotore mit geringer Wärmeentwicklung, wie z. B. Synchron-Drehstrom-Linermotore zum Antrieb des Werkzeugschlittens für mindestens eine Bewegungsrichtung. Bei Synchron-Drehstrom-Linearmotoren wird das mit Dauermagneten bestückte Sekundärteil von elektromagnetischen Wechselfeldern direkt in translatorische, d. h. in lineare Bewegung versetzt.

Rotierende Teile sind nicht vorhanden. Wenn die Spulen zur Erzeugung der elektrischen Wanderfelder im Primärteil der Linearmotore von einer modernen Elektronik angesteuert werden, so kann das Sekundärteil des Linearmotors präzise und mit sehr hohen Beschleunigungen in die gewünschte Position gefahren werden.

Linearmotore als Antriebe für den Werkzeugschlitten von Drehmaschinen haben folgende Vorteile:
- Wegen fehlender rotierender Teile und der geringen Masse des Sekundärteils des Linearmotors können gute Beschleunigungswerte erreicht werden, wo-durch schnelle Lagewechsel des Werkzeugschlittens und damit des Werkzeugs möglich sind.
- Da mechanische mit Spiel behaftete Zwischenglieder, wie Spindeln, Kupplungen etc. entfallen, wird die Präzision, mit der die Steuerelektronik den Li-nearmotor ansteuert und dieser sich bewegt, direkt am Werkzeug wirksam.

Hochdynamische Linearmotore wie z. B. Synchron-Drehstrom-Linearmotore haben noch die zusätzlichen Vorteile:
- höchste Dynamik, d. h. oszilllerende Bewegungen mit mindestens 100 Hz sind möglich, wobei Positioniergenaulgkeiten erreicht werden, die im Nanometer-Bereich liegen.
- nur eine sehr geringe Wärmeentwicklung tritt auf, da das Sekundärteil nicht wie beim AsynchronMotor durch Induktion (= Wärmeentwicklung) angetrieben wird, sondern Ober moderne Dauermagnete verfügt.
- sehr große Haltekräfte Insbesondere auch im Stillstand werden erreicht, was ebenfalls mit den genannten Dauermagneten zusammenhängt.

Die erfindungsgemäße Hochgeschwindigkeits-Drehmaschine zum Herstellen von optisch aktiven Oberflächen beliebiger Form an Linsen, Hohlspiegeln und anderen optischen Bauteilen hat typischerweise eine motorisch angetriebene, rotierende Spindel mit senkrechter Achse (C-Achse) zur Aufnahme des Werkstücks und einen Werkzeugschlitten mit mindestens zwei Linearführungen, der zur Aufnahme der Werkzeuge dient, Mittels dieser Linearführungen kann der Werkzeugschlitten sowohl in axialer Richtung (Z-Achse) als auch in radialer Richtung (X-Achse), bezogen auf die Spindelachse (C-Achse), bewegt werden. Diese beiden Bewegungen können unabhängig voneinander ausgeführt werden. Zum Antrieb in mindestens einer Richtung ist ein hochdynamischer Linearmotor vorgesehen, z. B. ein Synchron-Drehstrom-Linearmotor. Es können jedoch auch zwei Linearmotore dieser Art zum Einsatz kommen.

Der Werkzeugschlitten ist so ausgeführt, daß er mehrere Werkzeuge (z. B. Drehmeisel, Polierwerkzeug) aufnehmen kann, die für die verschiedenen Be-erbeitungsgange nacheinander eingesetzt werden. Typischerweise kommt zunächst ein spezieller Diamant-Drehmeisel zum Einsatz, der die Oberfläche zunächst so bearbeitet, daß sie pollerfähig ist. Ein zweites Werkzeug, das seitlich versetzt angeordnet ist, bringt anschließend die Fase am Umfang der Linse an. Es kann jedoch auch der Rand der Linse komplett bearbeitet werden, wobei eine beliebige Kontur möglich ist. Wenn die grundsätzliche Form der Linse hergestellt ist, wird die Oberflache durch Polieren nachbearbeitet, so daß die gewünschte optisch aktive Oberfläche entsteht. Für den genannten Arbeitsgang Polieren kann ein angetriebenes (rotierendes) oder nicht angetriebenes Werkzeug benutzt werden. In jedem Fall ist das Polierwektreug an dem Werkzeugschlitten befestigt und führt ähnliche Bewegungen durch, wie der vorgenannte Drehmeisel.

Die hohe Dynamik der genannten Linearmotore gestattet es, den Werkzeugschlitten mit hohen Beschleunigungswerten so zu bewegen, daß er wahrend einer einzigen Umdrehung der Werkstückspindel mehrfach die Richtung der Vorschubbewegung ändert. Es lassen sich damit optisch aktive Oberflächen mit nahezu jeder gewünschten Geometrie herstellen. So können z. B. beliebig gekrümmte Brillengläser gefertigt werden, ohne daß zwischen der Bearbeitung mit dem Diamant-Drehmeisel und dem Polieren weitere Feinschleifoperationen notwendig sind.

Die Vorteile der erfindungsgemäßen Hochgeschwindigkeits-Drehmaschine sind wie folgt:
- Es ist möglich, nahezu beliebige optisch aktive Oberflächen herzustellen, ohne daß das Werkstück umgespannt werden muß, was die Genauigkeit erhöht,
- Durch die erweiterten Fertigungsmöglichkeiten, z. B. bei der Herstellung von bifokalen, torus-artigen oder auch anderen beliebig gekrümmten Brillengläsern, können Arbeitsschritte entfallen, die bisher zum Anarbeiten der unterschiedlichen Oberflächen nötig waren. Dadurch werden die Kosten reduziert.
- Durch die außerordentlich präzise Führung des Werkzeugschilttens können Arbeitsgänge entfallen, die sonst vor dem Polieren nötig sind, damit ei-ne genügend gute Oberflächenqualität erreicht wird. Zum Herstellen eines Brillenglases genügt nun eine Feinst-Drehbearbeitung (polierfähige Qualität) mit anschließender Randbearbeitung, danach erfolgt die Kurz-Politur.
- Da der Linearmotor ohne drehende Teile auskommt, ist der Verschleiß der erfindungsgemäßen Hochgesohwindigkeits-Drehmaschine geringer als bei üblichen Drehmaschinen. Der Wartungsaufwand reduziert sich.
- Da der Werkzeugschlitten mit mehreren Werkzeugen ausgerüstet wird, können Arbeitsgänge auf nachgeschalteten Maschinen entfallen. In einer Aufspannung des Werkstückes wird die polierfähige Oberfläche mit einem Werkzeug hergestellt, während anschließend mit einem zweiten Werkzeug die Randbearbeitung durchgeführt wird. Mit einem dritten Werkzeug wird danach die Oberfläche poliert. Weitere Kosteneinsparungen sind die Folge

Die erfindungsgemäße Hochgeschwindigkeits-Drehmaschine hat typischerweise für die Werkstückspindel einen Drehzahlbereich von ca. 750 U/min bis 3.000 U/min und arbeitet mit nahezu konstanter Schnittgeschwindigkeit (Bahngeschwindigkelt) über einen weiten Bereich des Drehradius durch Nachregeln der Drehzahl. In der Nähe der Rotationsachse wird die Drehzahl begrenzt. Die Maschine kann jedoch auch mit anderen Drehzahlen betrieben werden. Von einem oder mehreren Linearmotoren angetrieben kann der Werkzeugschlitten mehrere Oszillationen (in der X- und/oder Z-Achse) pro Umdrehung der Werkstückspindel (G-Achse) ausführen. Eine Oszillation bedeutet dabei eine Vorschubbewegung mit Richtungsumkehr. Umgerechnet ergibt sich aus dem genannten Drehzahlbereich und angenommenen zwei Oszillationen pro Umdrehung eine Frequenz von 25 bis 100 Hz, mit der der Werkzeugschlitten hin- und herschwingen muß. Es sind jedoch auch andere Frequenzen möglich.

Zum Ausgleich der auftretenden freien Massenkräfte, die durch die Bewegung des Sekundärteils des Linearmotors und dem angehängtem Werkzeugschiltten einschließlich Werkzeug entstehen, kann es zweckmäßig sein, spezielle Ausgleichsvorrichtungen vorzusehen. Bei einer solchen Vorrichtung kann z. B. eine gleich große Masse in entgegengesetzter Richtung mit gleicher Frequenz in Schwingung versetzt werden. Die Massenkräfte heben sich in diesem Falle auf.

Normalerweise ist des Lage-Meßsystem, das die genaue Lage der linear bewegten Teile erfaßt, in den Linearmotor integriert. Es kann jedoch auch sinnvoll sein, das Meßsystem an dem Werkzeugschlitten anzuordnen. Dadurch wird sichergestellt, daß die genaue Lage des Werkzeugschilttens auch dann gewährleistet ist, wenn andere Teile der Maschine Bewegungen (z. B. Schwingungsbewegungen) ausführen.

Das Lage-Maßsystem wird so gewählt, daß es mit absoluter Messung arbeitet, wodurch die Position des Werkzeugschilttens immer bekannt ist. Vorteilhafterweise wird hierfür ein absolut messender Glasstab mit eingeätzter Skala benutzt.

Bei der erfindungsgemäßen Hochgeschwindigkeits-Drehmaschine für optisch aktive Oberflächen wird das Sekundärteil des Linearmotors vorzugsweise mit einem U-förmigen Querschnitt ausgebildet Dadurch erhält das Sekundärteil des Linearmotors eine besonders hohe Steifigkeit und außerdem ergibt sich hierdurch die Möglichkeit, an den beiden seitlichen Flachen des U-förmigen Sekundärteils des Linearmotors das beidseitig vorgesehene lineare Führungssystem anzubringen. Für diese Linearführung des Sekundärteils des Linearmotors mit dem angehängten Werkzeugschlitten und dem Werkzeug werden vorzugsweise vorgespannte lineare Kugelumlauflührungen oder Rollenumilaufführungen vorgesehen. Es können jedoch auch andere Führungssysteme eingesetzt werden.

An dem Werkzeugschlitten können anstelle der vorher erwähnten Diamant-Drehmeisel für die verschiedenen Bearbeitungen auch Schneidköpfe mit einem Schnellwechselsystem befestigt werden, die es gestatten, beliebige Schneidköpfe in schneller Folge einzusetzen, Gleichermaßen können auf dem Werkzeugschlitten auch Werkzeugspindeln mit Antrieb montiert werden. Die erfindungsgemäße Maschine kann dann auch zum Fräsen bzw. zum Schleifen von Linsen aus härterem Material, z. B. Mineralglas, eingesetzt werden.

Ein besonderes Erfindungsmerkmal ist die Hochleistungselektronik, die in der Lage sein muß, bei jeder neuen Umdrehung der Werkstückspindel (G-Achse) einen völlig neuen Datensatz für die Z-und ggf. auch für die X-Achse bereitzustellen. Bei einer angenommenen Drehzahl der Werkstückspindel von 3.000 U/min dauert eine Umdrehung 0,2 Sek Wegen der Reaktionszeiten und der nötigen Regelvorgänge steht diese Zeit jedoch nicht zur Verfügung, sondern alle 4 ms muß ein neuer Datensatz bereitstehen.

Der hieraus resultierende sehr große Datenfluß erfordert Rechnerkapazitäten, die welt über das heute übliche hinausgehen.

Eine Ausführung der Hochgeschwindigkeits-Drehmaschine mit einem hochdynamischen Linearmotor für die Z-Achse und einem konventionellen Antrieb mit rotierendem Motor für die X-Achse wird nachstehend an einem Beispiel erläutert.

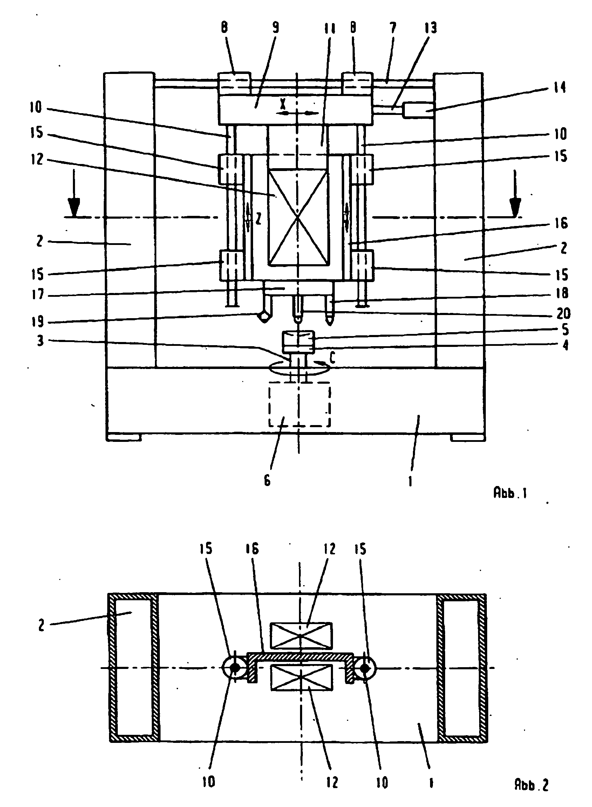

Abbildung 1 zeigt eine Ansicht der Maschine.
Abbildung 2 zeigt einen Querschnitt durch die Maschine.

*Anmerkung:* Die verschiedenen Möglichkeiten des Massenausgleichs wurden nicht dargestellt, ebenso nicht die zusätzlichen Bestückungsmöglichkeiten des Werkzeugschlittens (17). Alle Bewegungen der Maschine werden von einer Hochleistungselektronik gesteuert und geregelt. Die drei Maschinenachsen (C-, X-und Z-Achse) sind miteinander verknüpft.

Der Maschinenkörper besteht aus einem unteren Maschinenbett (1), auf dem sich rechts und links zwei senkrechte Seitenteile (2) aufbauen. In dem Maschinenbett (1) ist die Werkstückspindel (8) gelagert, die an ihrem oberen Ende eine Aufnahme (4) für das Werkstück (5) aufweist, Die Werkstückspindel (3) wird von einem Elektromotor (6) angetrieben und kann wahlweise kontinuierlich umlaufen oder als kann durch Achaumschaltung in eine gesteuerte Rundachse (C-Achse) verwandelt werden.

Die beiden Seitenteils (2) tragen an ihrem oberen Ende zwei waagrechte, hintereinander liegende Führungsrohre (7), auf denen die Kugelumlaufführungen (8) laufen. Diese ermöglichen die radiale Werkzeugbewegung (X-Achse) und tragen die Traverse (9). An der Traverse (9) ist rechts und linke je ein Führungsrohr (10) befestigt und außerdem trägt as das Zwischenstück (11) zur Aufnahme des Primärteils (12) des Linearmotors mit den Statorwicklungen.

Die Traverse (9) ist außerdem mit einer Koppelstange (13) verbunden, die die Verbindung zu einem konventionellen Vorschubantrieb (14) herstellt. Mit diesem konventionellen Vorschubantrieb (14) wird die radiale Werkzeugzustellung (in horizontaler Richtung) angetrieben (X-Achse).

Auf den vertikalen Führungsrohren (10) laufen rechts und links je zwei Kugelumlaufführungen (15), die ihrerseits den beweglichen Sekundärteil (16) des Linearmotors tragen und damit die axiale Bewegung ermöglichten (Z-Achse). An dem Sekundärteil (16) des Linearmotors ist der Werkzeugschlitten (17) befestigt, der im dargestellten Beispiel drei Werkzeuge trägt. Das rechte Werkzeug (18) dient zum Bearbeiten der Kontur des Werkstücks (5), während das linke Werkzeug (19) zum Anarbeiten von Fasen am Werkstück (5) dient. Das mittlere Werkzeug (20) ist das Polierwerkzeug.

Die Funktion der Maschine ist wie folgt:
Das Werkstück (5) wird mittels Werkstückspindel (3) in schnelle Umdrehung versetzt Anschließend wird der Werkzeugschlitten (17) mittels Sekundärteil (16) des Linearmotors in der Z-Achse soweit vertikal nach unten gefahren und mittels konventionellem Vorschubantrieb (14) in der X-Achse soweit horizontal verfahren, daß die Spitze des Werkzeuges (18) den äußeren Rand des Werkstückes (5) gerade berührt. Während anschließend der Vorschubantrieb (14) für eine gleichmäßige Vorschubbewegung von Werkzeugschlitten (17) und Werkzeug (18) in horizontaler, d. h. radialer Richtung sorgt (X-Achse), wird der Werkzeugschiltten (17) mit dem Werkzeug (18) von dem Sekundärteil (16) des Linearmotors in vertikaler d. h. axialer Richtung (Z-Achse) oszillierend so bewegt, daß die gewünschte Kontur am Wertstück (5) entsteht. Dieser Arbeitsgang kann - falls erforderlich - anschließend mit hoher Schnittgeschwindigkeit bei sehr kleinen Zusteilbewegungen in der X-Achse wiederholt werden, um die gewünschte oberflächenqualität zu erreichen. Anschließend wird die Linse mit Werkzeug (19) am Umfang bearteitet und mit Werkzeug (20) poliert. Alle Bewegungen in den drei Achsen sind miteinander verknüpft, d. h. sie hängen voneinander ab.

### Bezugszeichenliste

- 1: Maschinenbett
- 2: Seitenteil
- 3: Werkstückspindel
- 4: Werkstückaufnahme
- 5: Werkstück
- 7: Führungsrohr
- 8: Kugslumlaufführung
- 9: Traverse
- 10: Führungsrohr
- 11: Zwischenstück
- 12: Primärteil
- 13: Koppelstange
- 14: Vorschubantrieb
- 16: Kugelumlaufführungen
- 18: Sekundärteil
- 17: Werkzeugschlitten
- 18: Werkzeug
- 19: Werkzeug
- 20: Werkzeug

## Patentansprüche

1. Maschine zum Herstellen von optisch aktiven, nicht drehsymmetrischen Oberflächen von Brillengläsern mit einer um eine C-Achse drehbaren, eine Werkstückaufnahme (4) aufweisenden elektronisch drehzahlgesteuerten Werkstückspindel (3) und einem mit Bezug zur C-Achse in radialer Richtung einer X-Achse und in axialer Richtung einer Z-Achse bewegbaren Werkzeugschlitten (17), **dadurch gekennzeichnet, dass** mindestens für die axiale Vorschubbewegung in Richtung der Z-Achse ein hochdynamischer Linearmotor vorgesehen ist und für die Bewegung des Werkzeugschlittens (17) in Richtung der X-und Z-Achse und für die Rotation der Werkstückspindel (3) um die C-Achse eine Steuerung und Lageregelung mit einer Hochleistungselektronik mit einem die Position des Werkzeugschlittens (17) entlang der X- und Z-Achse sowie die Drehung der Werkstückspindel (3) um die C-Achse kontrollierenden Steuerungsprozessor vorgesehen ist, wobei die Drehzahl sowie die Phase der Rotation der Werkstückspindel (3) um die C-Achse regelbar ist und über den Steuerungsprozessor der Hochleistungselektronik Positionsabhängigkeiten zwischen der X-, Z- und der C-Achse generierbar sind, wobei der Werkzeugschlitten (17) mittels des Linearmotors in Richtung der Z-Achse eine Oszillationsfrequenz von mindestens 100 Hz ausführen kann, aber auch in einem Frequenzbereich zwischen 25 Hz und 100 Hz betrieben werden kann, wobei die C-Achse, die X-Achse und die Z-Achse steuerungstechnisch derart elektronisch verknüpft sind, dass pro Spindelumdrehung ein neuer, die aktuellen Abhängigkeiten zwischen den Achsen definierender Datensatz für die Bewegungsänderung des Werkzeugschlittens zur Verfügung stellbar ist.

2. Maschine nach Anspruch 1, **dadurch gekennzeichnet, dass** der Bewegung des Werkzeugschlittens (17) in Richtung der X-Achse ein mehrere Oszillationen pro Umdrehung der Werkstückspindel (3) gewährleistender, hochdynamischer Linearmotor zugeordnet ist.

3. Maschine nach einem der Ansprüche 1 bis 2, **dadurch gekennzeichnet, dass** zum Positionieren des Werkzeugschlittens (17) ein Lagemesssystem mit absoluter Messung vorgesehen ist und dieses Lagemesssystem integrierter Bestandteil des Linearmotors ist oder als gesondertes Maschinenteil im Bereich des Werkzeugschlittens (17) angeordnet ist.

4. Verwendung der Maschine nach einem der Ansprüche 1 bis 3, **dadurch gekennzeichnet, dass** durch Ansteuern der Rotation der Werkstückspindel (3) um die C-Achse die Drehzahl der Werkstückspindel (3) erhöht wird, wenn das Werkzeug radiale Bewegungen in der X-Achse, Richtung Rotationsachse der Werkstückspindel (3) (C-Achse), ausführt, so dass die Schnittgeschwindigkeit konstant bleibt und diese Veränderung der Drehzahl kurz vor Erreichen der Linsenmitte abgebrochen wird und von da an mit konstanter Drehzahl weitergearbeitet wird, wobei anschließend die Schneidkante des Werkzeugs exakt durch die Linsenmitte hindurch geführt wird und dann mit umgekehrter Ansteuerung der Z-Achse noch ein Stück über die Linsenmitte hinausläuft und dann mit kleinem Gradienten in homogener Bewegung in Z-Richtung von dem Werkstück abgehoben wird.

5. Verwendung der Maschine nach Anspruch 1 bis 3 oder Verwendung nach Anspruch 4 zur Bearbeitung eines Werkstücks,
**dadurch gekennzeichnet, dass**
a) die optisch aktive Fläche des Werkstücks mit einem Drehmeißel bearbeitet wird,
b) die Umfangsfläche des Werkstücks und die Randfläche mit Bezug zur Umfangsform mit einem zweiten Werkzeug bearbeitet wird,
c) die optisch aktive Fläche des Werkstücks danach poliert wird.

6. Verwendung der Maschine nach Anspruch 5,
**dadurch gekennzeichnet, dass**
für das Polieren ein antreibbares oder ein nicht angetriebenes Werkzeug verwendet wird.

7. Verwendung der Maschine nach Anspruch 5 oder 6,
**dadurch gekennzeichnet, dass**
für die Drehbearbeitung ein erstes Werkzeug und für das Polieren ein zweites Werkzeug verwendet wird, wobei das Werkstück während der gesamten Bearbeitung in einer Aufspannung verbleibt.

8. Verfahren zur Steuerung einer Maschine zum Herstellen von nicht drehsymmetrischen, optisch aktiven Oberflächen von Brillengläsern mit einer um eine C-Achse drehbaren, eine Werkstückaufnahme (4) aufweisenden elektronisch drehzahlgesteuerten Werkstückspindel (3) und einem mit Bezug zur C-Achse in radialer Richtung einer X-Achse und in axialer Richtung einer Z-Achse bewegbaren Werkzeugschlitten (17), **dadurch gekennzeichnet, dass** mindestens für die axiale Vorschubbewegung in Richtung der Z-Achse ein hochdynamischer Linearmotor vorgesehen ist und für die Bewegung des Werkzeugschlittens (17) in Richtung der X- und Z-Achse und für die Rotation der Werkstückspindel (3) um die C-Achse eine Steuerung und Lageregelung mit einer Hochleistungselektronik mit einem die Position des Werkzeugschlittens (17) entlang der X- und Z-Achse sowie die Drehung der Werkstückspindel (3) um die C-Achse kontrollierenden Steuerungsprozessor vorgesehen ist, wobei die Drehzahl sowie die Phase der Rotation der Werkstückspindel (3) um die C-Achse geregelt wird und über den Steuerungsprozessor der Hochleistungselektronik Positionsabhängigkeiten zwischen der X-, Z- und der C-Achse generiert werden, wobei der Werkzeugschlitten (17) mittels des Linearmotors in Richtung der Z-Achse eine Oszillationsbewegung mit einer Frequenz von mindestens 100 Hz ausführt und bei einem Drehzahlbereich der C-Achse zwischen 750 U/min und 3.000 U/min eine Oszillationsbewegung mit einer Frequenz zwischen 25 Hz und 100 Hz ausführt und dass die C-Achse, die X-Achse und die Z-Achse steuerungstechnisch derart elektronisch verknüpft werden, dass pro Spindelumdrehung ein neuer, die aktuellen Abhängigkeiten zwischen den Achsen definierender Datensatz für die Bewegungsänderung des Werkzeugschlittens zur Verfügung gestellt wird.

## Claims

1. Machine for producing optically active non rotationally symmetric surfaces of spectacle lenses, the machine possessing a workpiece spindle (3) which is turnable around a C-axis and the rotation of which is electronically controlled and which has a workpiece holder (4), and also possessing a tool carriage (17) that can be moved in the radial direction of a X-axis and axial direction of a Z-axis with respect to the C-axis, **characterized in that** the machine also possesses a high-performance linear motor being used at least for the axial motion in the direction of the Z-axis, and also possesses a control and position control with high-performance electronics and a processor for controlling the motion of the tool carriage (17) in direction of the X- and the Z-axes and for controlling the rotation of the spindle (3) around the C-axis, and the position of the tool carriage (17) alongside the X and Z-axes as well as the rotation of the spindle (3) around the C-axis, whereas the speed and the phase of the rotation of the spindle (3) around the C-axis is controllable and dependencies between the X-, Z- and the C-axis can be generated by means of the processor of the high-performance electronics, whereas the tool carriage (17) is capable of performing oscillating strokes in direction of the Z-axis with a frequency of at least 100 Hz, but can also be actuated between 25 Hz and 100 Hz, by means of the linear motor, whereas the C-axis, the X-axis and the Z-axis are electronically interlinked in a way, that for each revolution of the spindle (3) a new data record for the alteration of the movement of the tool carriage (17) is available, which defines the actual dependencies of the axes.

2. Machine according to claim 1, **characterized in that** a high-performance linear motor is allocated to the motion of the tool carriage (17) in the direction of the X-axis, the linear motor assuring several oscillations per revolution of the spindle (3).

3. Machine according to claims 1 to 2, **characterized in that** a position measuring system with absolute measurement is provided for the positioning of the tool carriage (17), and this position measuring system is an integral part of the linear motor or that the position measuring system is a separate machine part in the region of the tool carriage (17).

4. Disposal of the machine according to claim 1 to 3, **characterized in that** the speed of the workpiece spindle (3) is increased by driving the C axis so that the cutting speed remains constant when the tool executes radial movements in the X axis towards the rotational axis of the tool spindle (C axis), and this change in speed is terminated shortly before the centre of the lens is reached and machining proceeds from there on at constant speed, the cutting edge of the tool running exactly through the centre of the lens und then, with reversed drive to the Z axis, continuing to run some way beyond the centre of the lens, after which it is lifted off the workpiece in the Z direction with a small gradient und a homogeneous motion.

5. Disposal of the machine according to claim 1 to 3 or disposal according to claim 4 for machining a workpiece, **characterized in that**
a) the optically active surface of the workpiece is machined with a cutting chisel;
b) with reference to the peripheral shape the peripheral surface and the lateral face of the workpiece are machined with a second tool;
c) the optically active surface of the workpiece is polished thereafter.

6. Disposal of the machine according to claim 5, **characterized in that** for the polishing procedure a driven or non-driven tool is used.

7. Disposal of the machine according to claim 5 or 6, **characterized in that** for the lathing procedure there is used a first tool and for the polishing procedure there is used a second tool, both procedures with a single chucking of the workpiece.

8. Method for controlling a machine for producing non rotationally symmetric, optically active surfaces of spectacle lenses, the machine possessing a workpiece spindle (3) which is turnable around a C-axis and the rotation of which is electronically controlled and which has a workpiece holder (4), and also possessing a tool carriage (17) that can be moved in the radial direction of a X-axis and axial direction of a Z-axis with respect to the C-axis, **characterized in that** the machine also possesses a high-performance linear motor being used at least for the axial motion in the direction of the Z-axis, and also possesses a control and position control with high-performance electronics and a processor for controlling the motion of the tool carriage (17) in direction of the X- and the Z-axes and for controlling the rotation of the spindle (3) around the C-axis, and the position of the tool carriage (17) alongside the X- and Z-axes as well as the rotation of the spindle (3) around the C-axis, whereas the speed and the phase of the rotation of the spindle (3) around the C-axis is controlled and dependencies between the X-, Z- and the C-axis are generated by means of the processor of the high-performance electronics, whereas the tool carriage (17) performs oscillating strokes in direction of the Z-axis with a frequency of at least 100 Hz, and in a speed range of the C-axis of 750 rpm to 3000 rpm actuates between 25 Hz and 100 Hz, by means of the linear motor, whereas the C-axis, the X-axis and the Z-axis becomes electronically interlinked in a way, that for each revolution of the spindle (3) a new data record for the alteration of the movement of the tool carriage (17) is generated, which defines the actual dependencies of the axes.

## Revendications

1. Machine pour la fabrication de surfaces de verres de lunettes optiquement actives, non symétriques en rotation, avec une broche porte-outil (3), dont la vitesse de rotation est commandée électroniquement, pouvant tourner autour d'un axe C et présentant un logement d'outil (4), et avec un chariot porte-outil (17) mobile par rapport à l'axe C dans la direction radiale d'un axe X et dans la direction axiale d'un axe Z, **caractérisée en ce qu'**au moins un moteur linéaire très dynamique est prévu pour le mouvement d'avance axial dans la direction de l'axe Z, et **en ce que**, pour le déplacement du chariot porte-outil (17) dans la direction de l'axe X et de l'axe Z et pour la rotation de la broche porte-outil (3) autour de l'axe C, il est prévu une commande et une régulation de position avec une électronique de grande puissance avec un processeur de commande contrôlant la position du chariot porte-outil (17) le long de l'axe X et de l'axe Z ainsi que la rotation de la broche porte-outil (3) autour de l'axe C, la vitesse de rotation ainsi que la phase de rotation de la broche porte-outil (3) autour de l'axe C étant réglables et,via le processeur de commande de l'électronique de grande puissance, des dépendances de position pouvant être générées entre les axes X, Z et C, le chariot porte-outil (17) pouvant, au moyen du moteur linéaire, effectuer, dans la direction de l'axe Z, une fréquence d'oscillation d'au moins 100 Hz, mais pouvant être actionné également dans une plage de fréquence comprise entre 25 Hz et 100 Hz, l'axe C, l'axe X et l'axe Z étant, au plan de la technique de commande, reliés électroniquement de sorte que, pour chaque rotation de broche, un nouveau jeu de données définissant les dépendances actuelles entre les axes peut être mis à disposition pour modifier le déplacement du chariot porte-outil.

2. Machine selon la revendication 1, **caractérisée en ce qu'**un moteur linéaire très dynamique assurant plusieurs oscillations pour chaque rotation de la broche porte-outil (3) est affecté au déplacement du chariot porte-outil (17) dans la direction de l'axe X.

3. Machine selon une des revendications 1 à 2, **caractérisée en ce que**, pour le positionnement du chariot porte-outil (17), un système de mesure de position avec mesure absolue est prévu, et **en ce que** ce système de mesure de position est une partie intégrante du moteur linéaire ou est disposé dans la zone du chariot porte-outil (17) en tant que partie de machine séparée.

4. Utilisation de la machine selon une des revendications 1 à 3, **caractérisé en ce que**, par le pilotage de la rotation de la broche porte-outil (3) autour de l'axe C, la vitesse de rotation de la broche porte-outil (3) est augmentée quand l'outil effectue des déplacements radiaux dans l'axe X, direction axe de rotation de la broche porte-outil (3) (axe C), de sorte que la vitesse de coupe demeure constante, et que cette variation de la vitesse de rotation est interrompue un peu avant que soit atteint le milieu de lentille et de sorte que, à partir de là, la poursuite du travail s'effectue à une vitesse de rotation constante, l'arête de coupe de l'outil étant ensuite guidée exactement à travers le milieu de lentille et sortant ensuite un peu au-delà du milieu de lentille avec un pilotage inversé de l'axe Z et puis étant soulevée de la pièce avec un faible gradient dans un mouvement homogène dans la direction Z.

5. Utilisation de la machine selon les revendications 1 à 3, ou utilisation selon la revendication 4 pour l'usinage d'une pièce,
**caractérisée en ce que**
a) la surface optiquement active de la pièce est usinée avec un outil de tournage,
b) la surface périphérique de l'outil et la surface marginale sont, par rapport à la forme périphérique, usinées avec un deuxième outil,
c) la surface optiquement active de la pièce est ensuite polie.

6. Utilisation de la machine selon la revendication 5, **caractérisée en ce que**,
pour le polissage, on utilise un outil pouvant être entraîné ou bien un outil non entraîné.

7. Utilisation de la machine selon la revendication 5 ou 6, **caractérisée en ce que**,
pour l'usinage par tournage, on utilise un premier outil et, pour le polissage, un deuxième outil, la pièce demeurant dans un serrage pendant la totalité de l'usinage.

8. Procédé de commande d'une machine pour la fabrication de surfaces de verres de lunettes optiquement actives, non symétriques en rotation, avec une broche porte-outil (3), dont la vitesse de rotation est commandée électroniquement, pouvant tourner autour d'un axe C et présentant un logement d'outil (4), et avec un chariot porte-outil (17) mobile par rapport à l'axe C dans la direction radiale d'un axe X et dans la direction axiale d'un axe Z, **caractérisé en ce qu'**au moins un moteur linéaire très dynamique est prévu pour le mouvement d'avance axial dans la direction de l'axe Z, et **en ce que**, pour le déplacement du chariot porte-outil (17) dans la direction de l'axe X et de l'axe Z et pour la rotation de la broche porte-outil (3) autour de l'axe C, il est prévu une commande et une régulation de position avec une électronique de grande puissance avec un processeur de commande contrôlant la position du chariot porte-outil (17) le long de l'axe X et de l'axe Z ainsi que la rotation de la broche porte-outil (3) autour de l'axe C, la vitesse de rotation ainsi que la phase de rotation de la broche porte-outil (3) autour de l'axe C étant réglées, et, via le processeur de commande de l'électronique de grande puissance, des dépendances de position étant générées entre les axes X, Z et C, le chariot porte-outil (17) effectuant, au moyen du moteur linéaire, dans la direction de l'axe Z, une fréquence d'oscillation d'au moins 100 Hz et, pour une plage de vitesse de rotation de l'axe C entre 750 tr/min et 3000 tr/min, effectuant un mouvement d'oscillation avec une fréquence comprise entre 25 Hz et 100 Hz, et **en ce que** l'axe C, l'axe X et l'axe Z sont, au plan de la technique de commande, reliés électroniquement de sorte que, pour chaque rotation de broche, un nouveau jeu de données définissant les dépendances actuelles entre les axes est mis à disposition pour modifier le déplacement du chariot porte-outil.
